# EUROPÄISCHE PATENTSCHRIFT

(11) **EP 4 015 308 B1**
(45) Veröffentlichungstag und Bekanntmachung des Hinweises auf die Patenterteilung: **12.06.2024**
(21) Anmeldenummer: 21205031.4
(22) Anmeldetag: 27.10.2021
(51) Int. Cl.: B60P 7/135

(54) **LADUNGSSICHERUNGSEINRICHTUNG UND LADENSICHERUNGSSYSTEM ZUM TRANSPORT VON STÜCKGUT**
LOAD SECURING DEVICE AND LOAD SECURING SYSTEM FOR TRANSPORTING PIECE GOODS
DISPOSITIF DE SÉCURISATION DE CHARGEMENT ET SYSTÈME DE SÉCURISATION DE CHARGEMENT DESTINÉ AU TRANSPORT DES MARCHANDISES

(30) Priorität: 21.12.2020 DE 102020134407
(43) Veröffentlichungstag der Anmeldung: 22.06.2022
(73) Patentinhaber: Gehrung, Philipp, 73760 Ostfildern (DE)
(72) Erfinder: Gehrung, Philipp, 73760 Ostfildern (DE)
(74) Vertreter: Mammel und Maser Patentanwälte PartG mbB

(56) Entgegenhaltungen:
- EP-A1- 3 326 861
- DE-U1-202007 019 318
- DE-U1-202013 005 936
- US-A- 4 092 039

## Beschreibung

Die Erfindung betrifft eine Ladungssicherungseinrichtung sowie ein Ladungssystem für einen Transport von Stückgut, insbesondere Ballen.

Aus der DE 20 2013 005 936 U1 ist ein Ladungssicherungssystem für den Transport von Stückgut, wie beispielsweise Ballen, bekannt. Auf einer Ladefläche eines Transportswagens ist am vorderen und hinteren Ende der Ladefläche jeweils ein Tragrahmen montiert. Diese Tragrahmen nehmen gemeinsam einen Pressrahmen auf, der sich entlang der gesamten Ladefläche zwischen dem vorderen und hinteren Tragrahmen erstreckt. In jeweils einem Tragrahmen ist ein Zylinder vorgesehen, um den Pressrahmen zum Beladen nach oben zu verfahren und nach dem Beladen nach unten in eine Transportposition zu verfahren, um das auf der Ladefläche aufliegende Transportgut zu sichern. Diese Anordnung muss bezüglich der Länge der Ladefläche individuell an den Anhänger oder Transportwagen angepasst werden. Darüber hinaus ist der Nachteil gegeben, dass beim Überführen des Pressrahmens aus einer Niederhaltefunktion mit einer Fixierkraft in eine abgehobene Position sämtliche auf der Ladefläche sich befindlichen Stückgüter nicht mehr gesichert sind.

Aus der US 4 092 039 A ist ein Lastkraftwagen mit einem in vertikaler Richtung ausfahrbarem Dach zur Erhöhung des Transportvolumens bekannt.

Aus der DE 20 2007 019 318 U1 ist ein Transportwagen für Stückgut, insbesondere Ballen bekannt. Der Transportraum wird durch Längsseitenwände gesichert, die mit einer Stützvorrichtung in eine bodennahe Öffnungsstellung und in eine zumindest eine obere Lage des gestapelten Stückgutes erfassende Schließstellung verlagerbar ist.

Aus der EP 3 326 861 A1 ist eine Ladungssicherungseinrichtung zur lateralen Sicherung einer Ladung in einem Laderaum bekannt. Die seitlichen Sicherungselemente können durch eine Schwenkbewegung geöffnet werden. Zusätzlich können die seitlichen Sicherungselemente durch einen auf- und abbewegbaren Rahmen zum Laderaum in der Höhe verstellbar positioniert werden.

Der Erfindung liegt die Aufgabe zugrunde, eine Ladungssicherungseinrichtung sowie ein Ladungssicherungssystem für zumindest ein Stückgut, insbesondere Ballen, vorzuschlagen, welches flexibel einsetzbar und ansteuerbar ist.

Diese Aufgabe wird durch eine Ladungssicherungseinrichtung für den Transport von zumindest einem Stückgut, insbesondere Ballen, gelöst, welche eine Hubsäule umfasst, die eine Säule und einen gegenüber der Säule auf- und abbewegbaren Träger aufweist, an welchem ein Niederhalter befestigt ist, der sich in einer Ebene senkrecht zur Längsachse der Hubachse erstreckt und eine Antriebseinrichtung in der Hubsäule aufweist, durch welche der Träger und somit der Niederhalter auf- und abbewegbar angesteuert ist, wobei die Säule und der Träger jeweils als eine Hülse ausgebildet sind, die teleskopierbar sind. Durch eine solche Ladungssicherungseinrichtung ist ermöglicht, dass eine vorbestimmte Anzahl von Stückgütern, insbesondere Ballen, die in Abhängigkeit deren Größe nahe und benachbart zur oder in die Hubsäule positioniert sind, durch den Niederhalter gemeinsamen fixiert werden. Dieser Niederhalter kann nur eine begrenzte Anzahl von Stückgütern fixieren, welche unmittelbar zur Hubsäule angeordnet sind. Durch die in der Hubsäule angeordnete Antriebseinrichtung kann ein maximaler Aufnahmeraum für die zur Hubsäule positionierbaren Stückgüter erzielt werden. Des Weiteren kann ermöglicht sein, dass beispielsweise mehrere Ladungssicherungseinrichtungen auf einer Ladefläche eines Anhängers vorgesehen sind und dadurch während dem Be- und Entladen von einer Ladungssicherungseinrichtung die weiteren Stückgüter, die durch die zumindest eine weitere Ladungssicherungseinrichtung gehalten sind, in der Transportposition gesichert bleiben.

Gemäß einer bevorzugten Ausführungsform ist vorgesehen, dass die Antriebseinrichtung als ein Hubzylinder, insbesondere als ein doppelt wirkender Zylinder, ausgebildet ist, der vorzugsweise hydraulisch ansteuerbar ist. Dies ermöglicht eine einfache und kompakte Ausgestaltung zur Ansteuerung einer Auf- und Abwärtsbewegung, um den Niederhalter in eine abgehobene Bestückposition überzuführen und darauffolgend in eine Halte- oder Fixierposition überzuführen, so dass der Niederhalter auf eine Oberseite des Stückgutes wirkt und dieses zur Ladefläche fixiert. Bevorzugt ist der Hubzylinder hydraulisch ansteuerbar, so dass dieser in einfacher Weise an eine Hydrauliksteuerung einer Zugkraftmaschine anschließbar ist.

Gemäß einer bevorzugten Ausführungsform der Hubsäule ist vorgesehen, dass der Träger als eine äußere Hülse ausgebildet ist, der die als Hülse ausgebildete Säule außen umgibt. Dies ermöglicht eine vereinfachte Befestigung des Niederhalters. Zusätzlich kann der Niederhalter dadurch in der Höhe verstellbar zur Hülse bzw. Träger angeordnet sein.

An dem Niederhalter ist bevorzugt ein Befestigungsabschnitt vorgesehen, der den Träger umgibt und mit einer lösbaren Verbindung, insbesondere einem lösbaren Befestigungselement, zum Träger fixierbar ist. Beispielsweise kann eine Schraubverbindung oder dergleichen vorgesehen sein. Vorteilhafterweise ist an dem Träger eine Lochrasterung vorgesehen, so dass in vorbestimmten Abständen der Niederhalter in der Höhe zum Träger fixierbar ist. Hierbei kann auch eine Steckverbindung, die vorzugsweise gesichert ist, genügen. Alternativ kann auch eine Klemmverbindung zwischen dem Befestigungsabschnitt und dem Träger vorgesehen sein, so dass eine stufenlose Einstellung in der Position des Niederhalters zum Träger ermöglicht ist.

Gemäß einer weiteren bevorzugten Ausführungsform des Niederhalters ist vorgesehen, dass dieser einen umlaufenden Niederhalterahmen aufweist, der den Träger beabstandet umgibt, so dass ein oder mehrere einander gegenüberliegende oder einander zugeordnete und zur Hubsäule ausgerichtete Stückgüter fixierbar sind. Beispielsweise können zwei einander gegenüberliegende oder vier zur Hubsäule ausgerichtete und jeweils aneinandergrenzende Stückgüter, insbesondere Ballen, wie beispielsweise Heu- oder Strohballen, durch den Niederhalterahmendes Niederhalters zur Ladefläche fixiert werden.

Der Niederhalterahmen des Niederhalters ist bevorzugt rund, quadratisch oder rechteckig ausgebildet. Dieser ist bevorzugt durch Streben zum Befestigungsabschnitt gehalten. Insbesondere kann eine Schweißkonstruktion aus einem Flachmaterial vorgesehen sein. Alternativ kann vorgesehen sein, dass der Niederhalter anstelle des Niederhalterahmens mehrere vom Träger ausgehend radial nach außen gerichtete Arme aufweist. Diese Arme können ebenfalls von oben auf dem Stückgut positioniert werden und somit das Stückgut zur Ladefläche fixieren.

Gemäß einer weiteren bevorzugten Ausgestaltung der Ladungssicherungseinrichtung ist vorgesehen, dass die Hubsäule auf einer Trägerplatte vorgesehen ist. Diese Trägerplatte ermöglicht eine einfache Positionierung auf der Ladefläche. Dadurch kann auch eine steife Anbindung der Hubsäule zur Ladefläche aufgrund der Auflagefläche der Trägerplatte ermöglicht sein.

Des Weiteren ist bevorzugt vorgesehen, dass die Trägerplatte eine Durchgangsbohrung aufweist, welche unterhalb der Hubsäule liegt und durch die Durchgangsbohrung die Hydraulikleitungen des Hubzylinders herausführbar sind. Somit kann diese Ladungssicherungseinrichtung auch in einfacher Weise an bestehende Anhänger mit einer Ladefläche nachgerüstet werden.

Die Hydraulikleitungen des Hydraulikzylinders sind bevorzugt an einen Sperrblock anschließbar. Dadurch kann sowohl eine Bestückposition, in welcher die Halbsäule ausgefahren bzw. der Niederhalter in einer oberen Position übergeführt ist als auch eine Niederhalte- oder Fixierposition, in welcher der Niederhalter auf dem zumindest einen Stückgut unter Krafteinwirkung aufliegt, gesichert werden.

Zwischen der Säule und dem Träger ist bevorzugt zumindest ein Gleitelement vorgesehen. Ein solches Gleitelement kann beispielsweise eine Kunststoffleiste oder eine Kunststoffschiene sein. Dadurch ist eine Leichtgängigkeit zwischen dem Träger und der Säule gegeben. Zudem kann dadurch ein geringes Spiel für eine verbesserte Führung erzeugt werden.

Die Säule und der Träger können gemäß einer Ausführungsform einen quadratischen oder rechteckigen Querschnitt aufweisen. Dadurch ist eine Verdrehsicherung gegeben. Gemäß einer weiteren alternativen Ausführungsform kann vorgesehen sein, dass die Säule und der Träger einen rechteckförmigen Querschnitt aufweisen, wobei eine Seitenfläche des rechteckförmigen Querschnitts in zwei V-förmig angeformte Flächenabschnitte unterteilt ist. Dies ermöglicht eine weitere Verbesserung in der Führung und gegen Verdrehen. Zusätzlich kann beispielsweise eine verbesserte Gleitführung gegeben sein, sofern die Gleitelemente an den V-förmig angeformten Flächenabschnitten und einer gegenüberliegenden Schmalseite vorgesehen sind.

Bevorzugt ist vorgesehen, dass die Größe des Niederhalters bzw. die flächige Erstreckung senkrecht zur Längsachse der Hubsäule zur Aufnahme von mehreren, insbesondere drei oder vier Ballen, die liegend oder stehend auf der Ladefläche angeordnet sein können, ausgebildet ist.

Des Weiteren ist bevorzugt vorgesehen, dass die Hubsäule eine Höhe aufweist, durch welche zwei übereinander angeordnete Stückgüter, insbesondere Ballen, fixierbar sind. Bei dieser Anordnung ist bevorzugt vorgesehen, dass der Niederhalter an einem oberen Ende des Trägers positioniert ist und die Ausfahrbewegung des Trägers zur Säule derart ist, dass diese zumindest geringfügig höher als die zwei übereinandergestapelten Stückgüter ist, um darauffolgend durch eine Absenkbewegung über den Niederhalter eine Fixierkraft auf die beiden übereinanderliegenden Stückgüter ausüben.

Die Ladungssicherungseinrichtung weist eine Nachspanneinrichtung auf, durch welche der Träger oder der Niederhalter federgelagert zur Antriebseinrichtung angeordnet ist. Durch diese Nachspanneinrichtung kann der Niederhalter in einer Niederhalteposition zum Stückgut mit einer Vorspannkraft, welche durch die Antriebseinrichtung aufgebracht wird, beaufschlagt werden. Eine solche Nachspanneinrichtung weist den Vorteil auf, dass beispielsweise bei einem Stückgut, welches als Ballen ausgebildet ist, die Höhe des Stückgutes sich beim Aufbringen einer Niederhaltekraft verringern kann. Durch die Nachspanneinrichtung kann somit ein selbständiges Nachsetzen des Niederhalters zur sicheren Fixierung der Stückgüter bzw. der Ladung ermöglicht sein. Ein separates Nachspannen, durch welche der Transport unterbrochen werden müsste, ist somit nicht erforderlich.

Insbesondere ist vorgesehen, dass die Nachspanneinrichtung ein Kraftspeicherelement, insbesondere ein Tellerfederpaket oder ein Druckspeicher ist, wodurch der Träger oder der Niederhalter in einer Ausgangsposition zur Antriebseinrichtung gehalten ist. Bei dem Federpaket kann es sich beispielsweise um mehrere übereinander angeordnete Tellerfedern handeln. Alternativ kann auch ein Druckfederelement, wie eine Spiraldruckfeder oder dergleichen, eingesetzt werden. Auch kann ein Druckspeicherelement ausgebildet sein, das mit einem Medium befüllt ist. Ebenso kann ein Elastomer vorgesehen sein, welches als Kraftspeicherelement dient.

Die der Erfindung zugrundeliegende Aufgabe wird des Weiteren durch ein Ladungssicherungssystem für den Transport von zumindest einem Stückgut, insbesondere Ballen, gelöst, bei dem auf einer Ladefläche, eines Anhängers oder eines Transportwagens eine oder mehrere Ladungsführungseinrichtungen gemäß einer der vorbeschriebenen Ausführungsformen montierbar sind. Dies ermöglicht eine einfache Ausstattung von neuen Transportwägen sowie eine einfache Nachrüstung von bestehenden Transportwägen. Zudem ist durch diese Ladungssicherungseinrichtung auf dem Transportwagen eine vereinfachte Handhabung beim Be- und Entladen sowie beim Sichern der Stückgüter ermöglicht.

Bevorzugt ist vorgesehen, dass die Ladungssicherungseinrichtungen mit der Trägerplatte auf der Ladefläche aufstellbar und vorzugsweise durch zumindest ein lösbares Spann- und/oder Klemmmittel befestigbar sind. Beispielsweise können Spann- oder Haltepratzen eingesetzt werden. Auch kann eine Verschraubung der Trägerplatte mit der Ladefläche vorgesehen sein.

Bevorzugt sind mehrere Ladungssicherungseinrichtungen auf einer Ladefläche des Transportwagens vorgesehen, wobei diese entlang einer Längsmittelachse der Lauffläche ausgerichtet und aufgestellt sind. Des Weiteren kann vorgesehen sein, dass die Ladungssicherungseinrichtungen von der Mitte der Ladefläche aus nach außen gerichtet mit einem Abstand zueinander positioniert sind. Dadurch kann eine gute Lastverteilung ermöglicht sein. Zudem sind die äußeren Bereiche der Ladefläche frei zugänglich, da die Ladungssicherungseinrichtung entlang der Längsmittelachse der Lauffläche ausgerichtet sind.

Die Hydraulikleitungen des jeweiligen Hubzylinders der Ladungssicherungseinrichtungen können über Kupplungen und/oder über einen Sperrblock an ein Hydraulikaggregat einer Zugkraftmaschine anschließbar sein. Vorteilhafterweise sind die Hydraulikleitungen durch jeweils eine Durchbrechung in der Ladefläche hindurchführbar und unterhalb der Ladefläche entlanggeführt, um einen Anschluss an das Hydraulikaggregat der Zugkraftmaschine zu ermöglichen. Dies ermöglicht, dass eine individuelle Ansteuerung der Ladungssicherungseinrichtung beim Be- und Entladen mit Ballen ermöglicht wird. Durch die Leitungsführung der Hydraulikleitungen kann wiederum die Ladefläche eben und ohne Störkanten zur Aufnahme von Stückgut ausgebildet sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Ladungssicherungseinrichtung in einer ausgefahrenen Position,
Figur 2 eine perspektivische Ansicht der Ladungssicherungseinrichtung gemäß Figur 1 mit einer alternativen Position eines Niederhalters,
Figur 3 eine perspektivische Ansicht der Ladungssicherungseinrichtung gemäß Figur 2 in einer eingefahrenen Position,
Figur 4 eine schematische Seitenansicht auf ein Ladungssicherungssystem,
Figur 5 eine perspektivische Ansicht auf eine alternative Ausführungsform einer Hubsäule der Ladungssicherungseinrichtung,
Figur 6 eine perspektivische Ansicht von oben auf die Ausführungsform gemäß Figur 5,
Figur 7 eine schematische Seitenansicht der Ladungseinrichtung in einer Ausgangsposition vor dem Fixieren eines Stückgutes, und
Figur 8 eine schematische Seitenansicht der Ladungseinrichtung mit einem fixierten Stückgut.

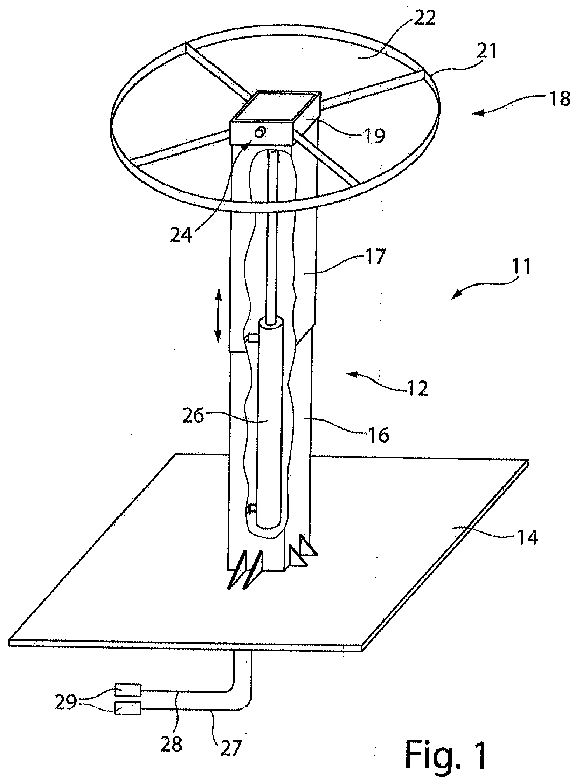

In Figur 1 ist eine perspektivische Ansicht einer Ladungssicherungseinrichtung 11 dargestellt. Diese Ladungssicherungseinrichtung umfasst eine Hubsäule 12, welche auf einer Trägerplatte 14 angeordnet, insbesondere befestigt, ist. Die Hubsäule 12 besteht aus einer Säule 16 und einem gegenüber der Säule 16 auf- und abbewegbaren Träger 17. Im Ausführungsbeispiel ist vorgesehen, dass der Träger 17 die Säule 16 umgibt. Der Träger 17 kann hülsenförmig ausgebildet sein. An dem Träger 17 ist ein Niederhalter 18 befestigt. Dieser Niederhalter 18 umfasst einen Befestigungsabschnitt 19 sowie einen mit Abstand zum angeordneten und umlaufenden Niederhalterahmen 21. Dieser Niederhalterahmen 21 ist durch Streben 22 mit dem Befestigungsabschnitt 19 fest verbunden. Der Niederhalterahmen 21 kann rund, quadratisch und/oder rechteckig ausgebildet sein. Zur Befestigung des Niederhalters 18 an dem Träger 17 ist vorzugsweise eine lösbare Verbindung 24 vorgesehen. Diese lösbare Verbindung 24 kann als eine Schraube oder Steck- oder Klemmverbindung ausgebildet sein.

Zur Auf- und Abbewegung des Niederhalters 18 ist eine Antriebseinrichtung 26 vorgesehen. Bevorzugt ist innerhalb der Hubsäule 12 die Antriebseinrichtung 26, beispielsweise in Form eines Hubzylinders, vorgesehen. Dieser Hubzylinder kann als doppelt wirkender Hubzylinder ausgebildet sein. Jeweils eine Zylinderkammer des Hubzylinders steht mit einer Hydraulikleitung 27, 28 in Verbindung. Die Hydraulikleitungen 27, 28 weisen Kupplungen 29 auf, die einen einfachen Anschluss an ein Hydraulikaggregat einer Zugkraftmaschine oder einen Sperrblock ermöglichen.

Bei den in Figur 1 dargestellten Ausführungsformen weist die Säule 16 und der Träger 17 vorzugsweise einen quadratischen Querschnitt auf. Alternativ kann dieser auch rechteckförmig sein. Dadurch ist eine Verdrehsicherung gebildet.

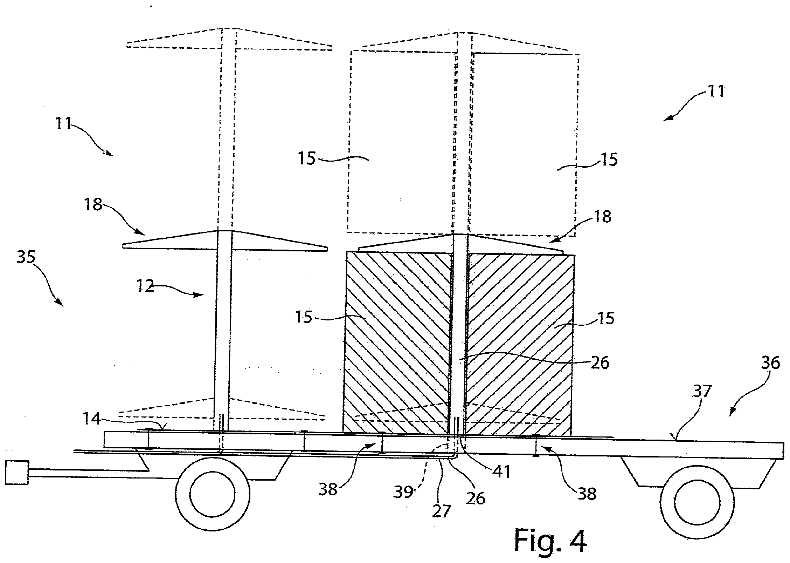

Ein durch die Ladungssicherungseinrichtung 11 zu sicherndes Stückgut wird, wie dies in Figur 4 dargestellt ist, zwischen der Trägerplatte 14 und dem Niederhalter 18 bzw. zwischen einer Ladefläche 37 eines Transportwagens 38 und dem Niederhalter 18 angeordnet und gehalten.

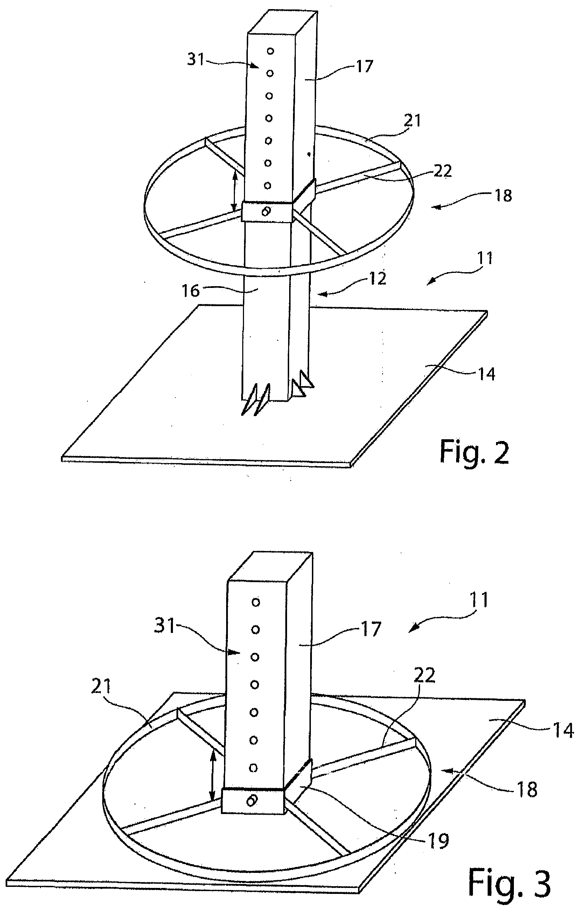

In Figur 2 ist eine perspektivische Ansicht der Ladungssicherungseinrichtung 11 gemäß Figur 1 mit dem Niederhalter 18 dargestellt, der in einer unteren Position am Träger 17 befestigt ist. Bei dieser Ausführungsform ist bevorzugt vorgesehen, dass beispielsweise nur ein Stückgut auf der Ladefläche 37 oder der Trägerplatte 14 positioniert ist und dieses durch den Niederhalter 18 niedergehalten ist. Bei der Ausführungsform gemäß Figur 1 ist ermöglicht, dass zwei übereinander positionierte Stückgüter 15 mittels dem Niederhalter 18 zur Trägerplatte 14 oder einer Ladefläche 37 niedergehalten werden können.

An dem Träger 17 kann eine Lochrasterung 31 vorgesehen sein. Durch diese Lochrasterung 31 kann der Niederhalter 18 gestuft in verschiedenen Höhen zum Träger 17 positioniert werden. Vorzugsweise ist eine Steckverbindung als lösbare Verbindung 24 vorgesehen. Alternativ kann auch eine Klemmverbindung, insbesondere auch für eine stufenlose Verstellung, ermöglicht sein.

In Figur 3 ist die Ladungssicherungseinrichtung 11 gemäß Figur 2 in einer abgesenkten Position oder in einer Nichtgebrauchsposition vorgesehen. Diese Anordnung weist den Vorteil auf, dass der Niederhalter 18 nahe zur Trägerplatte 14 oder auf dieser aufliegend positioniert ist. Dadurch sind die wirkenden Momente beim Transport auf die Ladungssicherungseinrichtung 11 verringert.

In Figur 4 ist eine schematische Seitenansicht eines Ladungssicherungssystems 35 vorgesehen. Dieses Ladungssicherungssystem 35 umfasst einen Transportwagen 36 mit einer Ladefläche 37. Vorzugsweise ist der Transportwagen 36 als Anhänger ausgebildet. Auf der Ladefläche 37 des Transportwagens 36 können ein oder mehrere Ladungssicherungseinrichtungen 11 aneinander gereiht positioniert werden. Der Abstand kann durch die Größe bzw. den Umfang der Stückgüter 15 bestimmt sein, so dass diese nahe aneinander liegend gehalten werden. Beispielsweise können die Ladungssicherungseinrichtungen 11 über eine Klemmbefestigung 38 oder eine Verschraubung oder dergleichen auf der Ladefläche 37 fixiert gehalten werden. Dies ermöglicht auch, dass bereits sich im Gebrauch befindliche Transportwägen 36 mit der Ladungssicherungseinrichtung 11 nachrüstbar sind.

In der Ladefläche 37 ist bevorzugt eine Durchbrechung 39 vorgesehen, die mit einer Durchbrechung 41 in der Trägerplatte 14 fluchtet, so dass die Hydraulikleitungen 27, 28 nach unten herausgeführt werden können. Diese Hydraulikleitungen 27, 28 werden unterhalb der Ladefläche 37 bevorzugt entlanggeführt, so dass diese mit einem Hydraulikaggregat und/oder einer Hydrauliksteuerung einer Zugkraftmaschine oder des Transportwagens 36 verbindbar sind. Bevorzugt sind in Reihe hintereinander entlang der Längsmittelachse der Ladefläche 37 mehrere Ladungssicherungseinrichtungen 11 ausgebildet.

Zum Beladen von Stückgütern 15, insbesondere Ballen, wird die Ladungssicherungseinrichtung 11 in eine obere Position verfahren, die höher ist als die Höhe des zu sichernden Stückgutes 15. Somit kann dieses Stückgut 15 auf die Ladefläche 37 aufgesetzt werden. Darauffolgend wird eine Verfahrbewegung des Niederhalters 18 über den Träger 17 nach unten durch den Hydraulikzylinder 26 angesteuert, wodurch der Niederhalter 18 auf der Oberseite des Stückgutes 15 aufliegt und eine Haltekraft aufbringt. Diese Haltekraft kann voreinstellbar sein.

Des Weiteren kann vorgesehen sein, wie dies strichliniert in Figur 4 dargestellt ist, dass die Ladungssicherungseinrichtung 11 die Sicherung von zwei übereinandergestapelten Stückgütern 15 ermöglicht. Je nach Größe und/oder Umfang der Stückgüter 15 können mehrere Stückgüter 15 um die Hubsäule 12 verteilt angeordnet sein. Bevorzugt werden beispielsweise vier Stückgüter 15 zur Hubsäule 12 ausgerichtet. Ergänzend können nochmals vier Stückgüter 15 oberhalb der auf der Ladefläche 37 aufliegenden Stückgüter 15 positioniert werden, welche durch eine Ladungssicherungseinrichtung 11 gesichert werden.

Die Anordnung von zwei oder mehreren Ladungssicherungseinrichtungen 11 auf der Ladefläche 37 weist den Vorteil auf, dass immer nur diejenige Ladungssicherungseinrichtung 11 betätigt wird, zu welcher ein Be- und Entladen der Stückgüter 15 erfolgt. Die weitere oder weiteren Ladungssicherungseinrichtungen 11 können in einer Halte- oder Fixierposition verbleiben, um die Stückgüter 15 gesichert zur Ladefläche 37 zu halten.

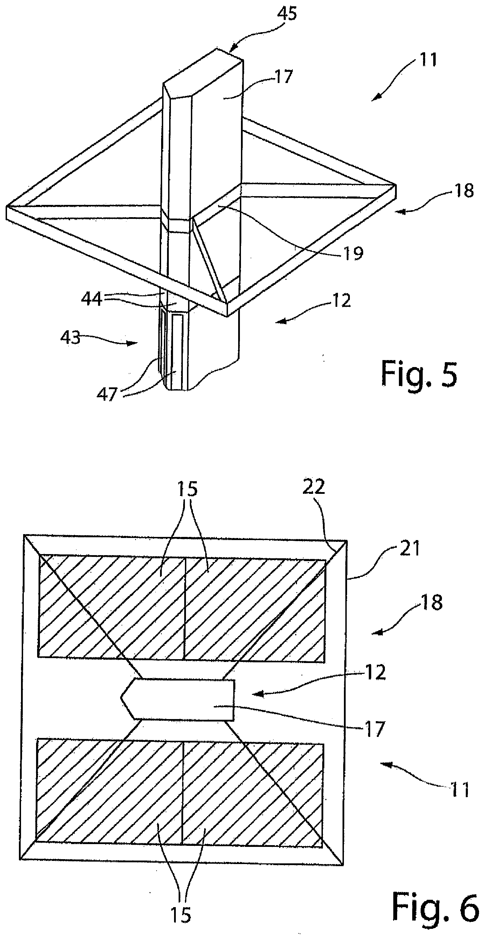

In Figur 5 ist eine perspektivische Ansicht auf eine alternative Ausführungsform der Hubsäule 12 zu Figur 1 dargestellt. Die Figur 6 zeigt eine schematische Ansicht von oben auf die Ausführungsform gemäß Figur 5.

Bei dieser Ausführungsform ist die Geometrie der Säule 16 und des Trägers 17 abweichend zu der Ausführungsform in Figur 1. Eine Seitenfläche 43 von einem rechteckförmigen Querschnitt des Trägers 17 und der Säule 16 weist V-förmig zueinander ausgerichtete Flächenabschnitte 44 auf. Dadurch kann eine zusätzliche Verdrehsicherung ermöglicht sein. Zusätzlich ist vorgesehen, dass an den Flächenabschnitten 44 und einer gegenüberliegenden Seitenfläche 45 zumindest ein Gleitelement 47 vorgesehen ist. Dieses Gleitelement 47 kann als ein Kunststoffstreifen ausgebildet sein, wodurch der Träger 17 für eine leichte Verfahrbewegung entlang der Säule 16 geführt ist.

Des Weiteren weicht diese Ausführungsform in Figur 5 zu der in Figur 1 dahingehend ab, dass anstelle eines runden Niederhalterahmen 21 ein eckiger, insbesondere quadratischer, Niederhalterahmen 21 ausgebildet ist.

In Figur 6 ist eine Draufsicht auf die Ladungssicherungseinrichtung 11 gemäß Figur 5 dargestellt. Bei dieser Ausführungsform sind beispielsweise rechteckförmige oder quadratische Stückgüter 15 dargestellt, welche zur Hubsäule 12 ausgerichtet sind und gemeinsam durch den einen
Niederhalter 18 fixiert gehalten werden können.

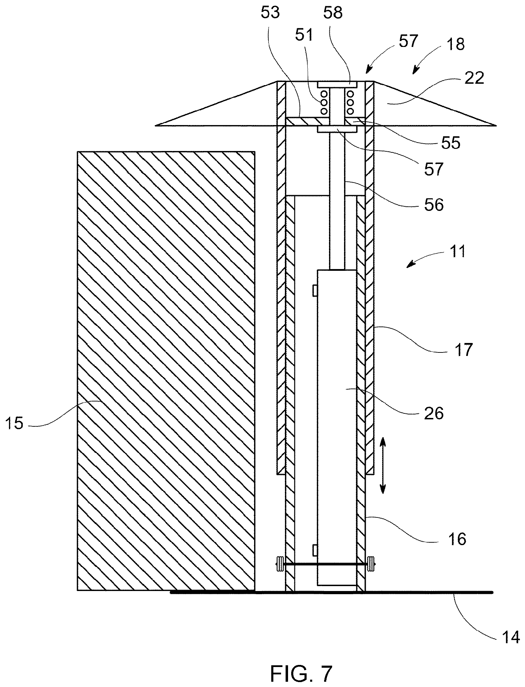

In Figur 7 ist eine schematische Seitenansicht der Ladungssicherungseinrichtung 11 in einer Schnittansicht dargestellt. Bei dieser Ausführungsform der Ladungssicherungseinrichtung 11 ist ergänzend zu den vorgeschriebenen Ausführungsformen eine Nachspanneinrichtung 51 vorgesehen, welche zwischen den Trägern 17 und der Antriebseinrichtung 26 wirkt. Bei den vorbeschriebenen Ausführungsformen greift ein stirnseitiges Ende des Hubzylinders 26 unmittelbar an einer Stirnplatte 53 des Trägers 17 an. Die Stirnplatte 53 schließt am oberen Ende den als Hülse ausgebildeten Träger 17.

Bei der in Figur 7 dargestellten alternativen Ausführungsform ist vorgesehen, dass in der Stirnplatte 53 des Trägers 17 eine Durchgangsbohrung 55 vorgesehen ist, durch welche sich eine Hubstange 56 des Hubzylinders 26 oder ein auf der Hubstange fixiertes Führungselement erstreckt. Unterhalb der Stirnplatte 53 ist an der Hubstange 56 ein Anschlag 57 vorgesehen. Bei einer Hubbewegung bzw. Ausfahrbewegung des Trägers 17 zur Hubsäule 12 liegt die Stirnplatte 53 des Trägers 17 an dem Anschlag 57 an, so dass der Träger 17 gemeinsam mit dem Niederhalter 18 nach oben bewegt wird. Zwischen dem stirnseitigen Ende der Hubstange 56 und der Stirnplatte 53 des Trägers 17 ist die Nachspanneinrichtung 51 angeordnet. Im Ausführungsbeispiel ist die Nachspanneinrichtung 51 als ein Tellerfederpaket ausgebildet. Dieses Tellerfederpaket greift zum einen an einer Oberseite der Stirnplatte 53 an. Gegenüberliegend ist eine Spannplatte 58 vorgesehen, welche am oberen Ende der Hubstange 56 oder dem Führungselement angreift.

In Figur 7 ist die Nachspanneinrichtung 51 in einer Ausgangsposition dargestellt. In diese Ausgangsposition wirkt bereits eine geringe Vorspannkraft zwischen der Stirnplatte 53 und der Spannplatte 58, so dass eine definierte Anordnung des Hubzylinders 26 zum Träger 17 gegeben ist.

Die Nachspanneinrichtung 51 kann alternativ weitere Kraftspeicherelemente aufweisen, welche in der Funktion der Tellerfedern entsprechen.

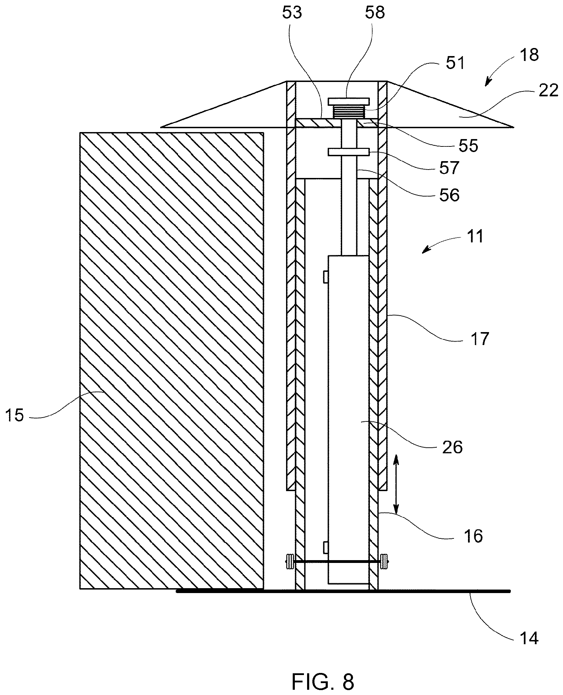

In Figur 8 ist eine schematische Seitenansicht der Ladungssicherungseinrichtung 11 gemäß Figur 7 in einer Niederhalteposition dargestellt.

Bei dieser Niederhalteposition greift der Niederhalter 18 an einer Oberseite des Stückguts 15 an und fixiert das Stückgut 15 auf der Ladefläche 37 des Transportwagens 36. Dabei wirkt eine erhöhte Vorspannkraft der Nachspanneinrichtung 51 gegenüber der in der Ausgangsposition auf das Stückgut 15. Der Anschlag 57 ist dabei gegenüber der Unterseite der Stirnplatte 53 nach unten abgesenkt.

Sobald nunmehr ein Setzen des Stückgutes 15 erfolgen sollte, kann die Nachspanneinrichtung 51 aufgrund der erhöhten Vorspannkraft dauerhaft die Niederhalteposition zum Stückgut 15 aufrechterhalten. Dies beruht darauf, dass die Nachspanneinrichtung 51 selbst bei einer Verfahrbewegung in Richtung Ausgangsposition des Niederhalters 18 zum Träger 17 noch eine hinreichende Vorspannkraft aufweist, um den Niederhalter 18 auf dem Stückgut 15 aufliegend zu positionieren und das Stückgut 15 zu fixieren.

## Patentansprüche

1. Ladungssicherungseinrichtung für den Transport von zumindest einem Stückgut (15), insbesondere Ballen,
- mit einem Niederhalter (18), der von oben auf das Stückgut (15) absenkbar ist und eine Niederhaltekraft auf das Stückgut (15) zum Halten des Stückgutes (15) ausübt,
- mit einer Hubsäule (12), welche eine Säule (16) und einen gegenüber der Säule (16) auf- und abbewegbaren Träger (17) aufweist, an dem der Niederhalter (18) befestigt ist, wobei der Niederhalter (18) sich in einer Ebene senkrecht zur Längsmittelachse der Hubsäule (12) erstreckt,
- mit einer Antriebseinrichtung (26), die in der Hubsäule (12) vorgesehen ist, durch welchen der Träger (17) auf- und abbewegbar angesteuert ist,
- wobei die Säule (16) und der Träger (17) jeweils als eine Hülse ausgebildet sind, die teleskopierbar sind,
**dadurch gekennzeichnet,**
- **dass** der Träger (17) oder der Niederhalter (18) mit einer Nachspanneinrichtung (51) federgelagert zur Antriebseinrichtung (26) angeordnet ist, so dass in einer Niederhalteposition des Niederhalters (18) zum Stückgut (15) die Nachspanneinrichtung (51) mit einer Vorspannkraft durch die Antriebseinrichtung (26) beaufschlagt ist.

2. Ladungssicherungseinrichtung nach Anspruch 1, **dadurch gekennzeichnet, dass** der als Hülse ausgebildete Träger (17) die als Hülse ausgebildete Säule (16) außen umgibt.

3. Ladungssicherungseinrichtung nach einem der vorhergehenden Ansprüche, **dadurch gekennzeichnet, dass** der Niederhalter (18) an dem Träger (17) höhenverstellbar, vorzugsweise über die gesamte Länge des Trägers (17), höhenverstellbar ist.

4. Ladungssicherungseinrichtung nach einem der vorhergehenden Ansprüche, **dadurch gekennzeichnet, dass** der Niederhalter (18) einen Befestigungsabschnitt (19) aufweist, der den Träger (17) umgibt und an diesen angreift und vorzugsweise eine lösbare Verbindung (24) vorgesehen ist, durch welche der Befestigungsabschnitt (19) lösbar zum Träger (17) fixiert ist.

5. Ladungssicherungseinrichtung nach einem der vorhergehenden Ansprüche, **dadurch gekennzeichnet, dass** der Niederhalter (18) einen umlaufenden Niederhalterahmen (21) aufweist, der beabstandet den Träger (17) umgibt, so dass ein oder mehrere aneinander anliegende oder einander gegenüberliegende und zur Hubsäule (12) ausgerichtete Stückgüter (15) fixierbar sind, und vorzugsweise der Niederhalterahmen (21) quadratisch oder rechteckig ausgebildet ist und der umlaufende Niederhalterahmen (21) durch Streben (22) mit dem Befestigungsabschnitt (19) verbunden ist, oder dass der Niederhalter (18) mehrere vom Träger (17) ausgehend radial nach außen gerichtete Arme aufweist.

6. Ladungssicherungseinrichtung nach einem der vorhergehenden Ansprüche, **dadurch gekennzeichnet, dass** die Hubsäule (12) auf einer Trägerplatte (14) vorgesehen ist und vorzugsweise die Trägerplatte (14) eine Durchgangsbohrung (41) aufweist, welche unterhalb der Hubsäule (12) liegt und durch die Durchgangsbohrung (41) die Hydraulikleitungen (27, 28) des Hubzylinders (26) herausführbar sind.

7. Ladungssicherungseinrichtung nach Anspruch 6 **dadurch gekennzeichnet, dass** die Hydraulikleitungen (27, 28) des Hubzylinders (26) der Hubsäule (12) eine Kupplung (29) aufweisen, die an einen Sperrblock und/oder einem Steuerungsaggregat einer Hydrauliksteuerung einer Zugkraftmaschine anschließbar sind.

8. Ladungssicherungseinrichtung nach einem der vorhergehenden Ansprüche, **dadurch gekennzeichnet, dass** die Säule (16) und der Träger (17) einen quadratischen oder rechteckförmigen Querschnitt aufweisen oder dass die Säule (16) und der Träger (17) einen rechteckförmigen Querschnitt aufweisen, wobei eine Seitenfläche (43) in zwei V-förmig ausgerichtete Flächenabschnitte (44) unterteilt ist.

9. Ladungssicherungseinrichtung nach einem der vorhergehenden Ansprüche, **dadurch gekennzeichnet, dass** die Größe des Niederhalters (18) zur Aufnahme von mehreren, insbesondere drei oder vier der Hubsäule (12) zugeordneten und um die Hubsäule (12) herum verteilt angeordnete Stückgüter (15), insbesondere Ballen, ausgebildet ist.

10. Ladungssicherungseinrichtung nach Anspruch 1, **dadurch gekennzeichnet, dass** die Nachspanneinrichtung (51) ein Kraftspeicherelement, insbesondere ein Tellerfederpaket, Federelemente oder ein Druckspeicher, umfasst, wodurch der Träger (17) oder der Niederhalter (18) in einer Ausgangsposition zur Antriebseinrichtung (26) gehalten ist und vorzugsweise unter Erhöhung einer Vorspannkraft in die Niederhalteposition überführbar ist.

11. Ladungssicherungssystem für den Transport von zumindest einem Stückgut (15), insbesondere Ballen, mit einem Transportwagen (36), der eine Ladefläche (37) für mehrere Stückgüter (15) aufweist, **dadurch gekennzeichnet, dass** ein oder mehrere Ladungssicherungseinrichtungen (11) nach einem der Ansprüche 1 bis 10 auf der Ladefläche (37) montiert sind.

12. Ladungssicherungssystem nach Anspruch 11, **dadurch gekennzeichnet, dass** die Ladungssicherungseinrichtung (11) mit der Trägerplatte (14) auf der Ladefläche (37) aufstellbar und mit einer lösbaren Spann- und/oder Klemmbefestigung (38) zur Ladefläche (37) fixierbar ist.

13. Ladungssicherungssystem nach Anspruch 11 oder 12, **dadurch gekennzeichnet, dass** die Ladungssicherungseinrichtungen (11) entlang einer Längsmittelachse der Ladefläche (37) ausgerichtet sind und vorzugsweise von der Mitte der Ladefläche (37) nach außen in Abstand zueinander positioniert sind.

14. Ladungssicherungssystem nach Anspruch 11 bis 13, **dadurch gekennzeichnet, dass** die Hydraulikleitungen (27, 28) des Hydraulikzylinders (26) durch eine Durchbrechung (39) in der Ladefläche (37) hindurchführbar und unterhalb der Ladefläche (37) entlang geführt und an einem Hydraulikaggregat einer Zugkraftmaschine anschließbar sind.

## Claims

1. Load securing device for the transportation of at least one unit load (15), in particular bales,
- with a hold-down device (18) which can be lowered onto the unit load (15) from above and exerts a hold-down force on the unit load (15) to hold the unit load (15),
- having a lifting column (12) which has a column (16) and a carrier (17) which can be moved up and down relative to the column (16) and to which the hold-down device (18) is fastened, the hold-down device (18) extending in a plane perpendicular to the longitudinal central axis of the lifting column (12),
- having a drive device (26) which is provided in the lifting column (12) and by means of which the support (17) is actuated so as to be movable up and down,
- wherein the column (16) and the carrier (17) are each designed as a sleeve which can be telescoped, **characterized in**
- **in that** the carrier (17) or the hold-down device (18) is arranged with a retensioning device (51) spring-mounted relative to the drive device (26), so that in a hold-down position of the hold-down device (18) relative to the unit load (15), the retensioning device (51) is acted upon with a pretensioning force by the drive device (26).

2. Load securing device according to claim 1, **characterized in that** the carrier (17), which is designed as a sleeve, surrounds the column (16), which is designed as a sleeve, on the outside.

3. Load-securing device according to one of the preceding claims, **characterized in that** the hold-down device (18) on the carrier (17) is height-adjustable, preferably over the entire length of the carrier (17).

4. Load securing device according to one of the preceding claims, **characterized in that** the hold-down device (18) has a fastening section (19) which surrounds the carrier (17) and engages thereon and preferably a detachable connection (24) is provided, by means of which the fastening section (19) is detachably fixed to the carrier (17).

5. Load securing device according to one of the preceding claims, **characterized in that** the hold-down device (18) has a circumferential hold-down frame (21) which surrounds the carrier (17) at a distance, so that one or more unit loads (15) lying against one another or lying opposite one another and aligned with the lifting column (12) can be fixed, and preferably the hold-down frame (21) is of square or rectangular design and the circumferential hold-down frame (21) is connected to the fastening section (19) by struts (22), or **in that** the hold-down device (18) has a plurality of arms directed radially outwards from the carrier (17) .

6. Load securing device according to one of the preceding claims, **characterized in that** the lifting column (12) is provided on a carrier plate (14) and preferably the carrier plate (14) has a through-hole (41) which lies below the lifting column (12) and through which through-hole (41) the hydraulic lines (27, 28) of the lifting cylinder (26) can be led out.

7. Load securing device according to claim 6, **characterized in that** the hydraulic lines (27, 28) of the lifting cylinder (26) of the lifting column (12) have a coupling (29) which can be connected to a locking block and/or a control unit of a hydraulic control system of a traction engine.

8. Load securing device according to one of the preceding claims, **characterized in that** the column (16) and the carrier (17) have a square or rectangular cross-section or that the column (16) and the carrier (17) have a rectangular cross-section, wherein a side surface (43) is subdivided into two surface sections (44) aligned in a V-shape.

9. Load securing device according to one of the preceding claims, **characterized in that** the size of the hold-down device (18) is designed to accommodate several, in particular three or four, unit loads (15), in particular bales, which are assigned to the lifting column (12) and are arranged distributed around the lifting column (12).

10. Load securing device according to claim 1, **characterized in that** the tensioning device (51) comprises a force storage element, in particular a disc spring assembly, spring elements or a pressure accumulator, as a result of which the carrier (17) or the hold-down device (18) is held in an initial position relative to the drive device (26) and can preferably be transferred to the hold-down position by increasing a pretensioning force.

11. Load securing system for the transport of at least one unit load (15), in particular bales, with a transport trolley (36) which has a loading surface (37) for a plurality of unit loads (15), **characterized in that** one or more load securing devices (11) according to one of claims 1 to 10 are mounted on the loading surface (37).

12. Load securing system according to claim 11, **characterized in that** the load securing device (11) can be set up with the carrier plate (14) on the loading surface (37) and can be fixed to the loading surface (37) by means of a releasable clamping and/or clamping fastening (38).

13. Load securing system according to claim 11 or 12, **characterized in that** the load securing devices (11) are aligned along a longitudinal central axis of the loading surface (37) and are preferably positioned at a distance from one another from the center of the loading surface (37) towards the outside.

14. Load securing system according to claims 11 to 13, **characterized in that** the hydraulic lines (27, 28) of the hydraulic cylinder (26) can be passed through an opening (39) in the loading surface (37) and are guided along underneath the loading surface (37) and can be connected to a hydraulic unit of a traction engine.

## Revendications

1. Dispositif d'arrimage de charges pour le transport d'au moins une marchandise de détail (15), en particulier des balles,
- avec un serre-flan (18) qui peut être abaissé par le haut sur la marchandise de détail (15) et qui exerce une force de maintien sur la marchandise de détail (15) pour maintenir la marchandise de détail (15),
- avec une colonne de levage (12) qui présente une colonne (16) et un support (17) pouvant monter et descendre par rapport à la colonne (16), sur lequel est fixé le serre-flan (18), le serre-flan (18) s'étendant dans un plan perpendiculaire à l'axe médian longitudinal de la colonne de levage (12),
- avec un dispositif d'entraînement (26), qui est prévu dans la colonne de levage (12), par lequel le support (17) est commandé de manière à pouvoir se déplacer vers le haut et vers le bas,
- la colonne (16) et le support (17) étant chacun conçus comme un manchon qui peut être télescopé, **caractérisé en ce que**
- que le support (17) ou le serre-flan (18) est disposé avec un dispositif de précontrainte (51) monté sur ressort par rapport au dispositif d'entraînement (26), de sorte que dans une position de maintien du serre-flan (18) par rapport à la marchandise de détail (15), le dispositif de précontrainte (51) est soumis à une force de précontrainte par le dispositif d'entraînement (26) .

2. Dispositif d'arrimage de charges selon la revendication 1, **caractérisé en ce que** le support (17) conçu comme un manchon entoure extérieurement le montant (16) conçu comme un manchon.

3. Dispositif d'arrimage de charges selon l'une des revendications précédentes, **caractérisé en ce que** le serre-flan (18) est réglable en hauteur sur le support (17), de préférence sur toute la longueur du support (17).

4. Dispositif d'arrimage de charges selon l'une des revendications précédentes, **caractérisé en ce que** le serre-flan (18) présente une portion de fixation (19) qui entoure le support (17) et s'engage sur celui-ci, et **en ce qu'**il est prévu de préférence une liaison amovible (24) par laquelle la portion de fixation (19) est fixée de manière amovible au support (17).

5. Dispositif d'arrimage de charges selon l'une des revendications précédentes, **caractérisé en ce que** le serre-flan (18) présente un cadre de serre-flan (21) périphérique qui entoure le support (17) à distance, de sorte qu'une ou plusieurs charges unitaires (15) adjacentes ou opposées les unes aux autres et orientées vers la colonne de levage (12) peuvent être fixées, et de préférence le cadre de maintien en position basse (21) est de forme carrée ou rectangulaire et le cadre de maintien en position basse (21) périphérique est relié par des entretoises (22) à la section de fixation (19), ou en ce que le dispositif de maintien en position basse (18) présente plusieurs bras orientés radialement vers l'extérieur en partant du support (17) .

6. Dispositif d'arrimage de charges selon l'une des revendications précédentes, **caractérisé en ce que** le montant de levage (12) est prévu sur une plaque de support (14) et, de préférence, la plaque de support (14) présente un trou traversant (41) qui est situé en dessous du montant de levage (12) et à travers le trou traversant (41), les conduites hydrauliques (27, 28) du vérin de levage (26) peuvent être sorties.

7. Dispositif d'arrimage de charges selon la revendication 6, **caractérisé en ce que** les conduites hydrauliques (27, 28) du vérin de levage (26) du montant de levage (12) comportent un raccord (29) qui peut être raccordé à un bloc de blocage et/ou à un groupe de commande d'une commande hydraulique d'un tracteur.

8. Dispositif d'arrimage de charges selon l'une des revendications précédentes, **caractérisé en ce que** le montant (16) et le support (17) présentent une section transversale carrée ou rectangulaire, ou **en ce que** le montant (16) et le support (17) présentent une section transversale rectangulaire, une surface latérale (43) étant divisée en deux portions de surface (44) orientées en V.

9. Dispositif d'arrimage de charges selon l'une des revendications précédentes, **caractérisé en ce que** la taille du serre-flan (18) est conçue pour recevoir plusieurs, notamment trois ou quatre, marchandises de détail (15), notamment des balles, associées à la colonne de levage (12) et réparties autour de la colonne de levage (12).

10. Système d'arrimage de charges selon la revendication 1, **caractérisé en ce que** le dispositif de post-tension (51) comprend un élément d'accumulation de force, en particulier un paquet de ressorts à disques, des éléments élastiques ou un accumulateur de pression, grâce auquel le support (17) ou le serre-flan (18) est maintenu dans une position initiale par rapport au dispositif d'entraînement (26) et peut être transféré dans la position de maintien en position basse, de préférence en augmentant une force de pré-tension.

11. Système d'arrimage de charges pour le transport d'au moins une marchandise de détail (15), en particulier des balles, avec un chariot de transport (36) qui présente une surface de chargement (37) pour plusieurs marchandises de détail (15), **caractérisé en ce qu'**un ou plusieurs dispositifs de sécurisation de charge (11) selon l'une des revendications 1 à 10 sont montés sur la surface de chargement (37).

12. Système d'arrimage de charges selon la revendication 11, **caractérisé en ce que** le dispositif d'arrimage de charges (11) peut être posé avec la plaque de support (14) sur la surface de chargement (37) et peut être fixé par rapport à la surface de chargement (37) au moyen d'une fixation amovible par serrage et/ou par pincement (38).

13. Système d'arrimage de charges selon la revendication 11 ou 12, **caractérisé en ce que** les dispositifs d'arrimage de charges (11) sont alignés le long d'un axe central longitudinal de la surface de chargement (37) et sont de préférence positionnés à distance les uns des autres depuis le centre de la surface de chargement (37) vers l'extérieur.

14. Système d'arrimage de charges selon les revendications 11 à 13, **caractérisé en ce que** les conduites hydrauliques (27, 28) du vérin hydraulique (26) peuvent être passées à travers une ouverture (39) dans la surface de chargement (37) et sont guidées le long en dessous de la surface de chargement (37) et peuvent être raccordées à un groupe hydraulique d'un moteur de traction.
